# EUROPÄISCHE PATENTSCHRIFT

(11) **EP 3 429 899 B1**
(45) Veröffentlichungstag und Bekanntmachung des Hinweises auf die Patenterteilung: **21.10.2020**
(21) Anmeldenummer: 17732824.2
(22) Anmeldetag: 13.06.2017
(51) Int. Cl.: B61D 3/10

(54) **VORRICHTUNG ZUR BLOCKIERUNG DER TORSIONSBEWEGUNG ZWISCHEN ZWEI GEKUPPELTEN SCHIENENFAHRZEUGEN**
DEVICE FOR BLOCKING A TORSIONAL MOVEMENT BETWEEN TWO COUPLED RAIL VEHICLES
DISPOSITIF DE BLOCAGE DU MOUVEMENT DE TORSION ENTRE DEUX VÉHICULES FERROVIAIRES ACCOUPLÉS

(30) Priorität: 16.06.2016 AT 505492016
(43) Veröffentlichungstag der Anmeldung: 23.01.2019
(73) Patentinhaber: Siemens Mobility Austria GmbH, 1210 Wien (AT)
(72) Erfinder: NEDELIK, Robert, 1100 Wien (AT)
(74) Vertreter: Deffner, Rolf
(86) Internationale Anmeldenummer: PCT/EP2017/064350
(87) Internationale Veröffentlichungsnummer: WO 2017/216134

(56) Entgegenhaltungen:
- EP-A2- 1 151 905
- WO-A1-03/011670

## Beschreibung

Vorrichtung zur Blockierung der Torsionsbewegung zwischen zwei gekuppelten Schienenfahrzeugen.

### Technisches Gebiet

Die Erfindung betrifft eine Vorrichtung zur Blockierung der Torsionsbewegung zwischen zwei gekuppelten Schienenfahrzeugen, insbesondere für ein mit einem Schienenfahrzeug gekuppelten weiteren Schienenfahrzeug in Sänftenbauweise.

### Stand der Technik

Typische Passagierschienenfahrzeuge weisen zwei Drehgestelle auf und können mit weiteren Fahrzeugen gekuppelt werden. Spezielle Zugkonfigurationen erfordern jedoch keine betriebsmäßige Trennbarkeit der Fahrzeugzusammenstellung, sodass andere Fahrzeugkonzepte eingesetzt werden können. Dies betrifft insbesondere U-Bahnen und Straßenbahnen, bei welchen beispielsweise auch sogenannte Sänftenwagen eingesetzt werden, welche kein eigenes Drehgestell umfassen sondern von den benachbarten Fahrzeugen getragen werden. Solcherart kann eine Einsparung an teuren und schweren Drehgestellen realisiert werden, wenn die erlaubte Achslast der Strecke die Erhöhung der Last an den verbleibenden Drehgestellen ermöglicht. Zwischen einem konventionellen und einem Sänftenwagen ist eine spezifische Kupplung vorgesehen, welche die Betriebs- und Gewichtskräfte übermittelt und welche die erforderliche Beweglichkeit für Kurven- Kuppen- und Wannenfahrten sicherstellt. Dafür sind insbesondere Kugelgelenke gut geeignet. Jedoch sind Maßnahmen zu treffen um eine Torsion zwischen diesen Fahrzeugen, d.h. ein Kippen des Sänftenwagens zu verhindern, was gemäß dem Stand der Technik mittels sogenannter Wankstützen erfolgen kann. Dabei werden die gekuppelten Fahrzeuge mittels eines Lenkers verbunden, wobei der Lenker an jedem Fahrzeug gelenkig angebunden ist und ein Kippen der Fahrzeuge zueinander verhindert, d.h. einen Bewegungsfreiheitsgrad des Kugelgelenks sperrt. Diese Wankstütze ist typischerweise zwischen den Fahrzeugen im Dachraum der Fahrzeuge angeordnet, wodurch die über den Lenker zu übermittelnden Kräfte aufgrund der Hebelgesetze im Vergleich zu einer Anordnung im Untergestellbereich reduziert sind. Bei kleinen Fahrzeugen mit untypisch geringem Querschnitt ist eine solche Anordnung jedoch nicht möglich, da dabei kein Durchgang für die Passagiere zwischen den Fahrzeugen offen bleiben würde, sodass das Sänftenprinzip bei solchen Fahrzeugen nicht anwendbar ist.

Aus dem Stand der Technik offenbaren EP 1 151 905 A2 und WO 03/011670 A1 weitere Vorrichtungen zur Blockierung der Torsionsbewegung zwischen zwei miteinander gekuppelten Schienenfahrzeugen.

### Darstellung der Erfindung

Der Erfindung liegt daher die Aufgabe zugrunde, eine Vorrichtung zur Blockierung der Torsionsbewegung zwischen zwei miteinander gekuppelten Schienenfahrzeugen anzugeben. Die Aufgabe wird durch eine Vorrichtung zur Blockierung der Torsionsbewegung zwischen zwei miteinander gekuppelten Schienenfahrzeugen mit den Merkmalen des Anspruchs 1 gelöst. Vorteilhafte Ausgestaltungen sind Gegenstand untergeordneter Ansprüche.

Dem Grundgedanken der Erfindung nach wird eine Vorrichtung zur Blockierung der Torsionsbewegung zwischen zwei miteinander gekuppelten Schienenfahrzeugen beschrieben, bei welcher bei einem ersten Fahrzeug mindestens ein ebenes Führungsgetriebe in einem außenwandseitigen Stirnbereich angeordnet ist, welches einen Punkt eines Gliedes des Führungsgetriebes in einem bestimmten Abschnitt seiner Führungsbahn im Wesentlichen horizontal führt, und wobei dieser Punkt mit je einer zugeordneten Schwenkeinrichtung verbunden ist, die an dem zweiten Fahrzeug um eine Vertikalachse schwenkbar angeordnet ist und wobei die Verbindung dieses Punktes mit der zugeordneten Schwenkeinrichtung Freiheitsgrade um die Querachse und die senkrechte Achse, bezogen auf die gekuppelten Schienenfahrzeuge, aufweist.

Dadurch ist der Vorteil erzielbar, eine Torsion, d.h. eine Wankbewegung der beiden miteinander gekuppelten Schienenfahrzeuge zueinander verhindern zu können. Die weiteren Freiheitsgrade der Kuppelstelle zwischen den gekuppelten Fahrzeugen sind dabei nicht eingeschränkt.

Zur Sperrung der Torsionsbeweglichkeit zwischen den gekuppelten Fahrzeugen, d.h. zur Herstellung einer Wanksteifigkeit ist dieser Freiheitsgrad zu blockieren und die anderen Freiheitsgrade unbeeinflusst zu lassen. Erfindungsgemäß ist dazu eine mechanische Kopplung zwischen den beiden Fahrzeugen vorzusehen, welche mindestens ein Führungsgetriebe (Koppelgetriebe) umfasst. Mittels eines Führungsgetriebes kann einem bestimmten Punkt auf einem der Elemente des Getriebes eine bestimmte Bahnkurve über den gesamten Bewegungsbereich des Getriebes vorgegeben werden. Zur Herstellung der Wanksteifigkeit müssen die Wagenkästen der beiden gekoppelten Schienenfahrzeuge torsionssteif verbunden werden, sodass Torsionskräfte zwischen den Wagenkästen übermittelbar sind. Da diese Kräfte auch bei allen möglichen Relativpositionen (bei Kurven- oder Wannenfahrt) der Wagenkästen zueinander übertragen werden müssen, kommen einfache Stangen nicht in Betracht, da solche die Kurvenfahrt verunmöglichen würden. Um eine von den Relativpositionen unabhängige Kraftübertragung zu ermöglichen, ist ein Führungsgetriebe vorgesehen, welches je einen bestimmten Punkt in einer von der Relativposition, genauer dem Wagenkastenausdrehwinkel unabhängigen Höhe über dem Gleisniveau führt. Dieser Punkt ist erfindungsgemäß über eine Schwenkeinrichtung mit dem weiteren Schienenfahrzeug zu verbinden. Die Schwenkeinrichtung umfasst eine um eine senkrecht ausgerichtete Achse schwenkbare Konsole, welche an dem weiteren Schienenfahrzeug angeordnet ist. Der höhenfeste Punkt des Führungsgetriebes ist mit der schwenkbaren Konsole verbunden.

Ein Führungsgetriebe ist ausreichend um die geforderte Funktionalität, die Herstellung der Torsionssteifigkeit, zu gewährleisten. Besonders vorteilhaft ist es jedoch, ein weiteres, zweites Führungsgetriebe an den der gegenüberliegenden Wagenkastenseite vorzusehen, da solcherart eine Redundanz hergestellt wird und die Sicherheit auch für den sehr unwahrscheinlichen Fall des Versagens (Bruch) eines Führungsgetriebes oder einer Schwenkeinrichtung wesentlich erhöht ist.

Besonders vorteilhaft ist gegenständliche Vorrichtung zur Blockierung der Torsionsbewegung bei Fahrzeugen, welche untereinander mittels eines Kugelgelenks gekuppelt sind. Kugelgelenke sind eine gebräuchliche, besonders vorteilhafte Möglichkeit zur Kopplung von Schienenfahrzeugen. Sie werden insbesondere bei Fahrzeugen eingesetzt, welche betriebsmäßig nur in einer bestimmten Konfiguration verkehren und nur in Werkstätten gekuppelt werden. Ein Kugelgelenk bietet drei rotatorische und keine translatorische Freiheitsgrade und kann sowohl Zug- als auch Druckkräfte zwischen den Fahrzeugen übertragen. Ein wesentlicher Vorteil eines Kugelgelenks liegt darin, dass der Drehpunkt geometrisch exakt definiert ist. Dies ist wesentlich, da zur Funktion gegenständlicher Erfindung, die durch die Führungsgetriebe auf einer konstanten Höhe über dem Gleisniveau gehalten werden in einer Linie mit dem Drehpunkt der Fahrzeugkupplung angeordnet sein müssen um Verspannungen zu verhindern.

Eine bevorzugte Ausführungsform der Erfindung sieht vor, die beiden ebenen Führungsgetriebe viergliedrig mit je zwei Schwingen und einer Koppel auszuführen, wobei der höhenkonstant gehaltene Punkt an der Koppel anzuordnen. Dies ist insbesondere vorteilhaft, da solcherart konfigurierte Getriebe mittels geeigneter Getriebesynthese eine effiziente Möglichkeit bieten die geforderte Bahnkurve zu realisieren. Getriebe mit mehr als vier Gliedern könnten zwar eine über den Bewegungsbereich geringere Höhenabweichung erzielen, würden jedoch einen wesentlich größeren Bauaufwand und Platzbedarf bedingen.

Der zu Verfügung stehende Bauraum macht es besonders vorteilhaft das Führungsgetriebe vertikal anzuordnen, d.h. die Drehachsen der Gelenke horizontal, sodass das Getriebe in einem Hohlraum in der Seitenwand eines der gekoppelten Schienenfahrzeuge einbaubar ist.

Die Vorrichtung zur Blockierung der Torsionsbewegung zwischen zwei miteinander gekuppelten Schienenfahrzeugen umfasst je Führungsgetriebe je eine zugeordnete Schwenkeinrichtung, die an dem zweiten Fahrzeug (jenem ohne Führungsgetriebe) um eine Vertikalachse schwenkbar angeordnet ist. Diese umfasst eine zur lösbaren Befestigung an dem Wagenkasten ausgebildete Konsole und einen an dieser Konsole schwenkbeweglich angeordneten Schwenkteil. In eingebautem Zustand ist somit eine Schwenkbewegung um die Hochachse möglich. Der Schwenkteil umfasst eine Aufnahme zur lösbaren Befestigung des durch das Führungsgetriebe höhenkonstant geführten Punktes. Diese Aufnahme ist einerseits um die Hochachse (senkrechte Achse) drehbeweglich ausgeführt, sodass eine Verschwenkung aufgrund von Kurvenfahrten möglich ist. Weiters weist diese Verbindung einen Freiheitsgrad um die Querachse, bezogen auf die gekuppelten Schienenfahrzeuge auf, sodass Kuppen- und Wannenfahrten keine Verspannung in den Führungsgetrieben bzw. den Schwenkeinrichtungen hervorrufen. Diese Verbindungsstelle ist besonders vorteilhaft mit einer Höhenjustiereinrichtung auszustatten, mittels welcher eine exakte Höhenanpassung der beiden höhenfesten Punkte zum Ausgleich von Fertigungstoleranzen erfolgen kann. Solcherart kann eine dauernde Belastung der Bauteile der Führungsgetriebe bzw. den Schwenkeinrichtungen vermieden werden und die Lebensdauer der Gelenke erhöht werden

Bei Kurvenfahrten ist das kurveninnere Führungsgetriebe weiter in Richtung der Fahrzeugmitte eingefahren, das kurvenäußere weiter ausgefahren. Es ist unerheblich, ob bei einer Kopplung eines konventionellen Schienenfahrzeugs mit einem in Sänftenbauweise die Führungsgetriebe an dem konventionellen oder dem Sänftenwagen angeordnet sind.

In weiterer Fortbildung der Erfindung ist es empfehlenswert, an der Verbindungsstelle zwischen dem höhenfesten Punkt an der Koppel eines Führungsgetriebes mit dem Schwenkteil der Schwenkeinrichtung eine elastische Einrichtung, vorzugsweise eine Feder einzufügen. Dadurch werden bestimmte, minimale Wankwinkel zwischen den gekuppelten Fahrzeugen möglich, was die auf die Führungsgetriebe wirkenden Kräfte reduziert.

### Kurzbeschreibung der Zeichnungen

Es zeigen beispielhaft:
- **Fig.1**: Zugzusammenstellung mit einem Sänftenwagen.
- **Fig.2**: Verbindungsstelle zweier Schienenfahrzeuge.
- **Fig.3**: Verbindungsstelle zweier Schienenfahrzeuge, mit Wagenkästen.
- **Fig.4**: Verbindungsstelle zweier Schienenfahrzeuge, mit Wagenkästen und Inneneinrichtung.
- **Fig.5**: Verbindungsstelle Koppel - Schwenkteil

### Ausführung der Erfindung

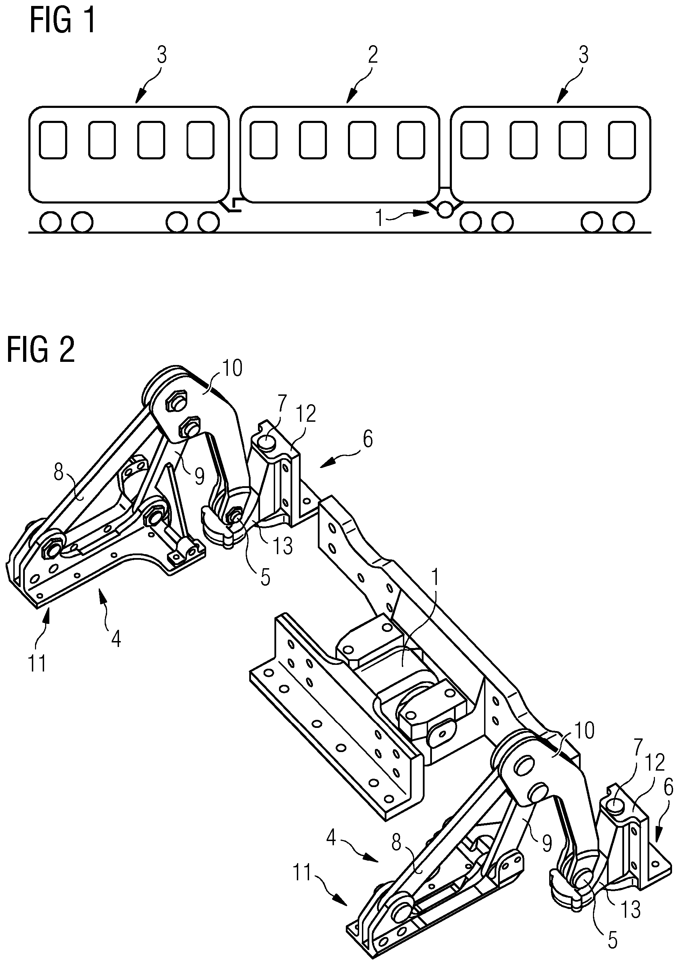

**Fig.1** zeigt beispielhaft und schematisch eine Zugzusammenstellung mit einem Sänftenwagen. Es ist ein Zug aus drei Fahrzeugen dargestellt, wobei ein Schienenfahrzeug in Sänftenbauweise 2 zwischen zwei konventionellen Schienenfahrzeugen 3 gekuppelt ist. Dabei ist zwischen dem Schienenfahrzeug in Sänftenbauweise 2 und dem rechten Schienenfahrzeug 3 eine Schienenfahrzeugkupplung 1 angeordnet. Die weitere Kupplung des Schienenfahrzeug in Sänftenbauweise 2 ist von anderer Ausführungsform, sie muß nur die Gewichts und Betriebskräfte zwischen diesen Fahrzeugen übertragen, wobei ein Kugelgelenk mit drei Rotationsfreiheitsgraden eingesetzt werden kann da die Schienenfahrzeugkupplung 1 am weiteren Fahrzeugende ein Wanken des Schienenfahrzeug in Sänftenbauweise 2 verhindert. Das Schienenfahrzeug in Sänftenbauweise 2 und das rechte gekuppelte konventionelle Schienenfahrzeug 3 können sich daher um ihre jeweilige Längsachse nur gemeinsam bewegen.
**Fig.2** zeigt beispielhaft und schematisch eine Verbindungsstelle zweier Schienenfahrzeuge mit einer Vorrichtung zur Blockierung der Torsionsbewegung. Es ist eine Kuppelstelle zwischen zwei Schienenfahrzeugen dargestellt, wobei nur ein die Fahrzeuge verbindendes Kugelgelenk 1 samt seinen Befestigungseinrichtungen und die Vorrichtung zur Blockierung der Torsionsbewegung gezeigt sind. Diese Bauteile sind in ihrer jeweiligen Einbaulage dargestellt, weitere Bauteile der Schienenfahrzeuge sind zur Vereinfachung der Darstellung nicht in Fig. 2 enthalten. Es ist je Fahrzeugseite ein Führungsgetriebe 4 angeordnet. Diese Führungsgetriebe 4 umfassen je ein Gestell 11, eine erste Schwinge 8, eine zweite Schwinge 9 und eine die beiden Schwingen 8, 9 verbindende Koppel 10. Die Koppel 10 ist über die Verbindungsstellen mit den Schwingen 8, 9 einseitig verlängert und weist einen höhenfesten Punkt 5 auf. Das Gestell 11 ist zur lösbaren Befestigung an einem Wagenkasten ausgestattet und weist die dafür erforderlichen Befestigungseinrichtungen, beispielsweise Bohrungen für Schraubverbindungen auf. Jedem Führungsgetriebe 4 ist eine Schwenkeinrichtung 6 zugeordnet, welche an dem gekoppelten Fahrzeug lösbar angeordnet ist. Diese Schwenkeinrichtungen 6 umfassen je eine Konsole 12 und einen Schwenkteil 13, welche zueinander um eine vertikal angeordnete Schwenkachse 7 drehbar gelagert sind. Die Konsole 12 ist jeweils mit ihrem zugeordneten höhenfesten Punkt 5 verbunden. Dabei ist diese Verbindungsstelle um die Hochachse, parallel zur vertikalen Schwenkachse 7 drehbeweglich und weist einen Freiheitsgrad um die Querachse der Fahrzeuge auf.

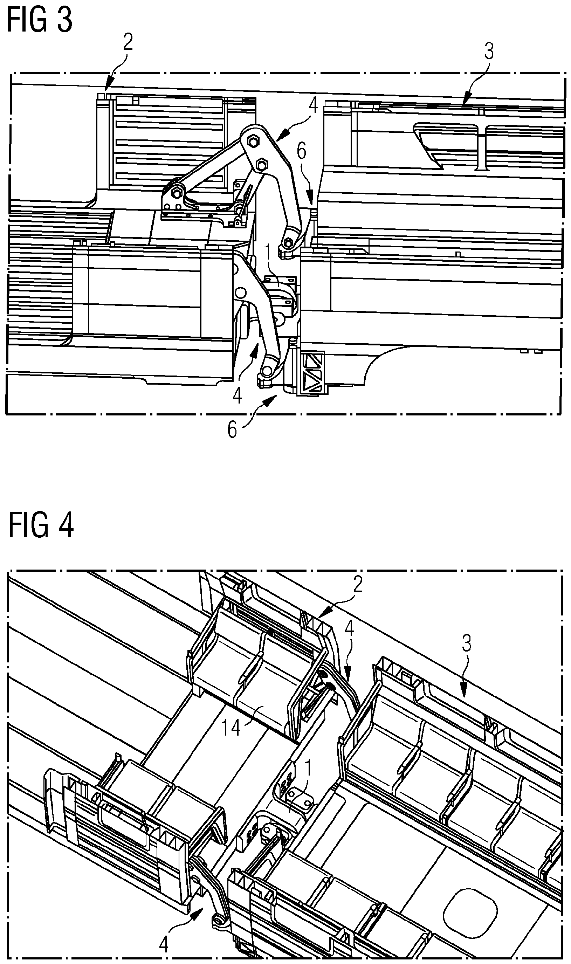

**Fig.3** zeigt beispielhaft und schematisch eine Verbindungsstelle zweier Schienenfahrzeuge mit einer Vorrichtung zur Blockierung der Torsionsbewegung und mit Wagenkästen. Es ist die Vorrichtung zur Blockierung der Torsionsbewegung aus Fig.2 in eingebauter Position dargestellt. Dabei sind ein Schienenfahrzeug in Sänftenbauweise 2 und eine konventionelles, mit Fahrwerken ausgestattetes Schienenfahrzeug 3 gekuppelt und mit zwei vertikal angeordneten Führungsgetrieben 4 und Schwenkeinrichtungen 6 ausgestattet. In der gezeigten Schrägansicht sind im Wesentlichen die horizontal geschnittenen Rohbauwagenkästen der Schienenfahrzeuge 2, 3 und das Kugelgelenk 1 gezeigt.
**Fig.4** zeigt beispielhaft und schematisch eine Verbindungsstelle zweier Schienenfahrzeuge mit einer Vorrichtung zur Blockierung der Torsionsbewegung und mit Wagenkästen sowie einer Inneneinrichtung. Es ist die Verbindungsstelle aus Fig.3 dargestellt, wobei zusätzlich noch eine Inneneinrichtung, umfassend Passagiersitze 14 in den Schienenfahrzeugen 2, 3 vorgesehen sind. Die Führungsgetriebe 4 sind wandseitig, platzsparend hinter den Passagiersitzen 14 angeordnet und nutzen im Wesentlichen sonst freibleibenden Bauraum.

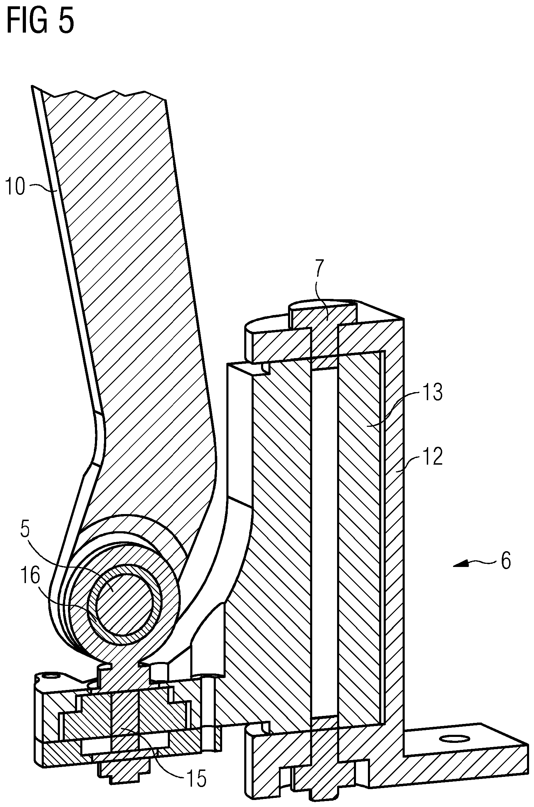

**Fig.5** zeigt beispielhaft und schematisch eine Verbindungsstelle einer Koppel mit einem Schwenkteil. Es ist eine Detaildarstellung der Vorrichtung zur Blockierung der Torsionsbewegung an der Verbindungsstelle der Koppel 10 mit dem Schwenkteil 6 in einer Schnittdarstellung gezeigt. Die vertikale Schwenkachse 7 bildet den Drehpunkt zwischen der Konsole 12 und dem Schwenkteil 13 der Schwenkeinrichtung 6. Der Schwenkteil 13 ist mit einer höhenverstellbaren Drehlagerung 15 ausgestattet, welche eine Drehbeweglichkeit um die vertikale Achse, parallel zu jener der vertikalen Schwenkachse 7 des Schwenklagers 16 herstellt. Der von der Koppel 10 geführte höhenfeste Punkt 5 ist von dem Schwenklager 16 geführt. Solcherart ist eine Drehbeweglichkeit der Koppel 10 gegenüber dem Schwenkteil 13 um den höhenfesten Punkt 5 gewährleistet. Die höhenverstellbare Drehlagerung 15 umfasst eine Einrichtung zur Höhenjustierung des Schwenklagers 16, was beispielsweise mittels eines Gewindes oder dem Beilegen von Abstandsscheiben erfolgen kann. Dadurch kann ein exaktes Fluchten der Achse linker höhenverstellbarer Punkt - Kugelgelenksdrehpunkt - rechter höhenverstellbarer Punkt erzielt werden.

### Liste der Bezeichnungen

- 1: Kugelgelenk
- 2: Schienenfahrzeug in Sänftenbauweise
- 3: Schienenfahrzeug
- 4: Führungsgetriebe
- 5: höhenfester Punkt
- 6: Schwenkeinrichtung
- 7: vertikale Schwenkachse
- 8: erste Schwinge
- 9: zweite Schwinge
- 10: Koppel
- 11: Gestell
- 12: Konsole
- 13: Schwenkteil
- 14: Passagiersitz
- 15: Höhenverstellbare Drehlagerung
- 16: Schwenklager

## Patentansprüche

1. Vorrichtung zur Blockierung der Torsionsbewegung zwischen zwei miteinander gekuppelten Schienenfahrzeugen (2, 3), wobei die Vorrichtung dafür geeignet ist, dass eines der beiden miteinander gekoppelten Schienenfahrzeuge in Sänftenbauweise ausgeführt ist,
wobei die Vorrichtung umfasst mindestens ein ebenes Führungsgetriebe, wobei bei einem ersten Fahrzeug das mindestens eine Führungsgetriebe (4) in einem außenwandseitigen Stirnbereich angeordnet werden kann, welches einen Punkt (5)
eines Gliedes des Führungsgetriebes (4) in einem bestimmten Abschnitt seiner Führungsbahn im Wesentlichen horizontal führt,
und wobei dieser Punkt (5) mit einer zugeordneten Schwenkeinrichtung (6) verbunden ist, die an dem zweiten Fahrzeug um eine Vertikalachse (7) schwenkbar angeordnet werden kann und wobei die Verbindung dieses Punktes (5) mit der zugeordneten Schwenkeinrichtung (6) Freiheitsgrade um die Querachse und die senkrechte Achse, bezogen auf die gekuppelten Schienenfahrzeuge (2, 3), aufweist.

2. Vorrichtung zur Blockierung der Torsionsbewegung zwischen zwei miteinander gekuppelten Schienenfahrzeugen (2, 3) nach Anspruch 1,
**dadurch gekennzeichnet, dass** das mindestens eine Führungsgetriebe (4) viergliedrig ausgeführt ist und je zwei Schwingen (8, 9) und eine Koppel (10) aufweisen, wobei der Punkt (5) an der Koppel angeordnet ist.

3. Vorrichtung zur Blockierung der Torsionsbewegung zwischen zwei miteinander gekuppelten Schienenfahrzeugen (2, 3) nach Anspruch 1 oder 2
**dadurch gekennzeichnet, dass**
das mindestens eine ebene Führungsgetriebe (4) vertikal angeordnet ist.

4. Vorrichtung zur Blockierung der Torsionsbewegung zwischen zwei miteinander gekuppelten Schienenfahrzeugen (2, 3) nach einem der Ansprüche 1 bis 3, **dadurch gekennzeichnet, dass** ein Gestell (11) des mindestens einen Führungsgetriebes (4) zur lösbaren Befestigung an einem Wagenkasten eines Schienenfahrzeugs ausgebildet ist.

5. Vorrichtung zur Blockierung der Torsionsbewegung zwischen zwei miteinander gekuppelten Schienenfahrzeugen (2, 3) nach einem Ansprüche 1 bis 3,
**dadurch gekennzeichnet, dass**
die mindestens eine Schwenkeinrichtung (6) zur lösbaren Befestigung an einem Wagenkasten eines Schienenfahrzeugs ausgebildet ist.

6. Vorrichtung zur Blockierung der Torsionsbewegung zwischen zwei miteinander gekuppelten Schienenfahrzeugen (2, 3) nach einem der Ansprüche 1 bis 5,
**dadurch gekennzeichnet, dass** in dem ersten Fahrzeug zwei ebene Führungsgetriebe (4) jeweils in einem in einem außenwandseitigen Stirnbereich angeordnet werden können
und in dem zweiten Fahrzeug zwei korrespondierende Schwenkeinrichtungen (6) vorgesehen : werden können.

## Claims

1. Device for blocking the torsional movement between two coupled-together rail vehicles (2, 3), wherein the device is suitable for one of the two coupled-together rail vehicles to be configured with a sedan construction, wherein the device comprises at least one planar guide mechanism, wherein, in a first vehicle, the at least one guide mechanism (4) can be arranged in an outer-wall-side end region and guide a point (5) of a member of the guide mechanism (4) substantially horizontally in a certain portion of its guide path, and wherein this point (5) is connected to an associated pivoting device (6) which can be arranged on the second vehicle so as to be pivotable about a vertical axis (7), and wherein the connection of this point (5) to the associated pivoting device (6) has degrees of freedom about the transverse axis and the perpendicular axis with respect to the coupled rail vehicles (2, 3).

2. Device for blocking the torsional movement between two coupled-together rail vehicles (2, 3) according to Claim 1, **characterized in that** the at least one guide mechanism (4) is configured with four members and has in each case two rocker arms (8, 9) and a coupler (10), wherein the point (5) is arranged on the coupler.

3. Device for blocking the torsional movement between two coupled-together rail vehicles (2, 3) according to Claim 1 or 2, **characterized in that** the at least one planar guide mechanism (4) is arranged vertically.

4. Device for blocking the torsional movement between two coupled-together rail vehicles (2, 3) according to one of Claims 1 to 3, **characterized in that** a frame (11) of the at least one guide mechanism (4) is designed for releasable fastening to a carriage body of a rail vehicle.

5. Device for blocking the torsional movement between two coupled-together rail vehicles (2, 3) according to one of Claims 1 to 3, **characterized in that** the at least one pivoting device (6) is designed for releasable fastening to a carriage body of a rail vehicle.

6. Device for blocking the torsional movement between two coupled-together rail vehicles (2, 3) according to one of Claims 1 to 5, **characterized in that,** in the first vehicle, two planar guide mechanisms (4) can in each case be arranged in an outer-wall-side end region and, in the second vehicle, two corresponding pivoting devices (6) can be provided.

## Revendications

1. Dispositif de blocage du mouvement de torsion entre deux véhicules ferroviaires (2, 3) attelés l'un à l'autre, le dispositif étant apte à permettre la conception à structure de litière d'un des deux véhicules ferroviaires attelés l'un à l'autre, le dispositif comportant au moins un train de guidage plat, dans lequel dans un premier véhicule, l'au moins un train de guidage (4) peut être prévu dans une partie frontale côté paroi extérieure, guidant de manière sensiblement horizontale un point (5) d'un membre du train de guidage (4) dans un tronçon précis de son trajet de guidage, ce point (5) étant relié à un dispositif de pivotement associé (6) susceptible d'être articulé sur le deuxième véhicule autour d'un axe vertical (7), et dans lequel la liaison dudit point (5) avec le dispositif pivotant associé (6) présente des degrés de liberté autour de l'axe transversal et de l'axe vertical par rapport aux véhicules ferroviaires (2, 3) attelés.

2. Dispositif de blocage du mouvement de torsion entre deux véhicules ferroviaires (2, 3) attelés l'un à l'autre selon la revendication 1, **caractérisé en ce que** l'au moins un train de guidage (4) est prévu sous forme quadripartite et comporte deux culbuteurs (8, 9) chacun et un attelage (10), le point (5) étant disposé sur l'attelage.

3. Dispositif de blocage du mouvement de torsion entre deux véhicules ferroviaires (2, 3) attelés l'un à l'autre selon la revendication 1 ou 2, **caractérisé en ce que** l'au moins un train de guidage plat (4) est disposé verticalement.

4. Dispositif de blocage du mouvement de torsion entre deux véhicules ferroviaires (2, 3) attelés l'un à l'autre selon l'une des revendications 1 à 3, **caractérisé en ce qu'**
un châssis (11) de l'au moins un train de guidage (4) est conçu pour être fixé de manière amovible à une caisse de véhicule ferroviaire.

5. Dispositif de blocage du mouvement de torsion entre deux véhicules ferroviaires (2, 3) attelés l'un à l'autre selon l'une des revendications 1 à 3, **caractérisé en ce que**
l'au moins un dispositif de pivotement (6) est conçu pour être fixé de manière amovible à une caisse de véhicule ferroviaire.

6. Dispositif de blocage du mouvement de torsion entre deux véhicules ferroviaires (2, 3) attelés l'un à l'autre selon l'une des revendications 1 à 5,
**caractérisé en ce que** dans le premier véhicule, deux trains de guidage plats (4) peuvent être disposés chacun dans une partie frontale du côté de la paroi extérieure et dans le second véhicule, deux dispositifs de pivotement correspondants (6) peuvent être prévus.
